(19) Europäisches Patentamt
European Patent Office
Office européen des brevets

(11) Veröffentlichungsnummer : **0 015 481**
**B1**

(12) **EUROPÄISCHE PATENTSCHRIFT**

(45) Veröffentlichungstag der Patentschrift : **15.12.82**

(51) Int. Cl.³ : **C 08 L 27/18**, C 08 J 3/04, C 08 F 6/24

(21) Anmeldenummer : **80100939.0**

(22) Anmeldetag : **26.02.80**

# (54) Konzentrierte Dispersionen von Fluorpolymeren und Verfahren zu deren Herstellung.

(30) Priorität : **01.03.79 DE 2908001**

(43) Veröffentlichungstag der Anmeldung : **17.09.80 (Patentblatt 80/19)**

(45) Bekanntmachung des Hinweises auf die Patenterteilung : **15.12.82 Patentblatt 82/50**

(84) Benannte Vertragsstaaten : **DE FR GB IT NL**

(56) Entgegenhaltungen : **DE A 2 644 152**

(73) Patentinhaber : **HOECHST AKTIENGESELLSCHAFT**
**Postfach 80 03 20**
**D-6230 Frankfurt/Main 80 (DE)**

(72) Erfinder : **Kuhls, Jürgen, Dr.**
**Unghausen 16a**
**D-8263 Burghausen/Salzach (DE)**
Erfinder : **Weiss, Eduard**
**Pergerstrasse 18**
**D-8263 Burghausen/Salzach (DE)**

**EP 0 015 481 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Konzentrierte Dispersionen von Fluorpolymeren und Verfahren zu deren Herstellung

Die Erfindung betrifft konzentrierte Fluorpolymeren-Dispersionen sowie ein Verfahren zur Aufkonzentrierung von fluorhaltige Emulgatoren enthaltenden kolloidalen Fluorpolymeren-Dispersionen unter Zugabe von Stabilisierungsemulgatoren, wobei gegebenenfalls der fluorhaltige Emulgator und der Stabilisierungsemulgator getrennt zurückgewonnen werden kann.

Kolloidale Dispersionen von Fluorpolymeren werden durch Emulsions-Polymerisation der entsprechenden Fluormonomeren (bzw. Comonomeren im Falle von Fluorcopolymeren-Dispersionen) in Gegenwart fluorhaltiger Emulgatoren hergestellt, wie beispielsweise beschrieben in US-Patentschrift 2 559 752. Bei diesem oder ähnlichen Emulsionspolymerisations-Verfahren können üblicherweise Polymer-Feststoffgehalte von 5 bis zu 40, höchstens bis zu 45 Gew.-%, erzielt werden. Für die meisten gewerblichen Anwendungszwecke, beispielsweise zur Bildung von Beschichtungen und Überzügen, ist es jedoch erwünscht oder sogar erforderlich, Fluorpolymeren-Dispersionen mit einem höheren Feststoffgehalt einzusetzen. Aus diesem Grund sind bereits eine ganze Reihe von Aufkonzentrierungsprozessen für Fluorpolymeren-Dispersionen entwickelt worden, wobei jedoch die zur Koagulation führende Scherempfindlichkeit solcher Dispersionen ein besonderes Problem darstellt. So lassen sich durch schonende Eindampfung unter Ausschluß des Zutritts von Luft nach der US-A 3 316 201 Konzentrate erhalten, welche jedoch den Nachteil aufweisen, daß sie einschließlich der nachträglich zugesetzten Stabilisierungsemulgatoren auch alle aus der Polymerisation stammenden Begleitstoffe noch enthalten. Es wurde schon frühzeitig versucht, die sich hieraus für die gewerbliche Anwendung solcher Dispersionen ergebenden Nachteile hinsichtlich Thermostabilität, Filmbildung, Toxizität und Koagulatbildung während der Eindampfung durch sogenannte Absetzverfahren oder Schichtentrennungsverfahren zu vermeiden. Bei solchen Verfahren wird durch Zugabe von nicht-ionischen Stabilisierungsmitteln, wie beispielsweise von Kondensationsprodukten von Phenolen oder Alkanolen mit Ethylenoxid (US-A 3 037 953), und von basischen Elektrolyten unter Erwärmung die Abscheidung einer konzentrierten Phase bewirkt, welche anschließend von dem überstehenden Serum abgetrennt werden kann. Nachteile dieser Verfahrensweise sind die bei der Erwärmung auftretende erhöhte Tendenz zur Koagulation, die Neigung des Konzentrats, den Absetzvorgang nach Abtrennung fortzusetzen sowie das Verbleiben des basischen Elektrolyten in der konzentrierten Dispersion. Es wurde versucht, diese Nachteile dadurch zu beseitigen, daß ein Teil des Stabilisierungsmittels in Form einer ausgewählten Gruppe von ethoxylierten Alkylphenolen am Anfang zugegeben wird, die Schichtentrennung durch mäßiges Erwärmen wenig oberhalb Raumtemperatur erfolgt und ein weiterer Teil an Stabilisierungsmittel dem Konzentrat im Anschluß an die Schichtentrennung hinzugefügt wird. Diese in der US-A 3 301 807 beschriebenen Maßnahmen führen jedoch zu einer unerwünschten Erhöhung des Gehalts an Stabilisierungsmittel sowie der Viskosität der aufkonzentrierten Dispersion.

Es wurde auch schon versucht, die Aufkonzentrierung von Fluorpolymeren-Dispersionen durch Wasserentzug mittels wasserbindender Substanzen zu bewirken, wie beispielsweise durch feste Ionenaustauscher-Harze (DE-C 10 81 221) oder durch dehydratisierende Verbindungen wie Glycerin, Polyglykole oder Reaktionsprodukte von Ethylenoxid und Propylenoxid mit Alkoholen, Fettsäuren, Aminen und dergleichen (DE-B 16 94 616). Hier ergeben sich Schwierigkeiten dadurch, daß es wünschenswert oder sogar erforderlich ist, diese wasserbindenden Substanzen vor der Weiterverwendung der Dispersion wieder aus dieser zu entfernen.

Schließlich ist auch bereits versucht worden, durch das Verfahren der Elektrodekantation konzentrierte wäßrige Polytetrafluorethylen-Dispersionen mit geringen Gehalten an Begleitstoffen zu gewinnen (GB-A 642 025). Von Nachteil ist hier jedoch, daß jede Koagulat- oder Belagsbildung an den Elektroden zur Stromunterbrechung führt, und daß dieser Prozeß nur außerordentlich geringe Raum-Zeit-Ausbeuten liefert.

Es besteht also nach wie vor ein Bedürfnis nach einem Verfahren, das die Herstellung konzentrierter, fluorhaltige Emulgatoren enthaltender, kolloidaler Fluorpolymeren-Dispersionen in einfacher und wirtschaftlicher Weise unter Vermeidung der vorgenannten Nachteile gestattet, wobei insbesondere hohe Raum-Zeit-Ausbeuten angestrebt werden und unerwünschte Gehalte an Begleitstoffen in den aufkonzentrieren Dispersionen vermieden oder reduziert werden sollen. Diesem Bedürfnis abzuhelfen, stellt eine Aufgabe der vorliegenden Erfindung dar, eine weitere liegt darin, den bei der Aufkonzentrierung der wäßrigen Phase anfallenden Gehalt an fluorhaltigem Emulgator möglichst weitgehend zurückzugewinnen, um Verluste an diesen teuren Substanzen zu vermeiden oder gering zu halten. Schließlich besteht noch eine weitere Aufgabe dieser Erfindung darin, Verluste an dem für die Aufkonzentrierung benötigten Stabilisierungsemulgatoren zu vermeiden oder gering zu halten.

Diesen Aufgaben wird gemäß vorliegender Erfindung Rechnung getragen durch ein Verfahren, das dadurch gekennzeichnet ist, daß die Fluorpolymeren-Dispersion nach Zusatz von 0,5 bis 12 Gew.-% eines Stabilisierungsemulgators, bezogen auf das Polymer-Feststoffgewicht der Dispersion, bei einer Temperatur zwischen 5 und 90 °C im Kreislauf über Einheiten von semipermeablen Ultrafiltrations-Membranen geleitet wird, wobei die Förderung im Kreislauf mit Fördergeschwindigkeiten von 2 bis 7 m/sec von Pumpen bewirkt wird, die die Fluorpolymeren-Dispersion berührungsfrei von Reibungskräfte hervorrufenden Teilen halten und wobei eine Trennung in ein Fluorpolymeren-Dispersionskonzentrat und ein

wäßriges Permeat, welches Teile des fluorhaltigen Emulgators und des Stabilisierungsemulgators enthält, erfolgt, und daß das erhaltene Fluorpolymeren-Dispersionskonzentrat aus dem Kreislauf abgezogen sowie das wäßrige Permeat getrennt aus dem Kreislauf abgeführt und gegebenenfalls Rückgewinnungsoperationen für die darin enthaltenen Anteile an fluorhaltigem Emulgator und Stabilisierungsemulgator zugeführt wird.

Es ist zwar bekannt, daß Dispersionen und Latices von natürlichen makromolekularen Stoffen, wie beispielsweise von Proteinen und Kohlehydraten, und auch von einer Reihe von synthetischen Hochpolymeren, wie zum Beispiel von Polyvinylchlorid oder von Mischpolymerisaten des Vinylchlorids, mit Hilfe des Verfahrens der Ultrafiltration aufkonzentriert werden können, wie beispielsweise beschrieben in DE-A 24 40 643 und 24 20 922. Fluorpolymeren-Dispersionen werden jedoch in diesem Zusammenhang niemals erwähnt. Dies hat offensichtlich seinen Grund darin, daß Fluorpolymeren-Dispersionen, insbesondere Polytetrafluorethylen-Dispersionen, schon bei Anwendung relativ geringer Scherkräfte zur Koagulation neigen, und eine solche Koagulation ist in jedem Fall, also auch bei der Aufkonzentrierung durch Ultrafiltration, unerwünscht, da sie Verluste an sehr teuren Materialien bewirkt. Es konnte nicht erwartet werden, daß kolloidale Fluorpolymeren-Dispersionen mit Hilfe von Pumpen mit den für die Ultrafiltration erforderlichen hohen Strömungsgeschwindigkeiten gefördert und über den notwendigen längeren Zeitraum umgewälzt werden können, ohne daß Koagulat in größerem Ausmaß gebildet wird. Überraschenderweise gelingt dies jedoch beim Einsatz spezieller Pumpen, bei denen dafür Sorge getragen wird, daß die Dispersion nicht oder im wesentlichen nicht in Berührung mit Teilen der Pumpe kommt, die gegeneinander mechanisch bewegt werden und dabei Reibungskräfte erzeugen. Derartige, Reibungskräfte erzeugende Teile sind in erster Linie konventionelle Abdichtungselemente an der Wellendurchführung. Offenbar wird die Dispersion beim Eindringen in die dünnen Spalte solcher Dichtelemente so hohen Scherkräften ausgesetzt, daß dort erhöhte Koagulation einsetzt und sich in das Innere der Flüssigkeit fortpflanzt, während überraschenderweise die Förderorgane der Pumpe selbst eine solche Wirkung nicht zeigen.

Pumpen, in denen gemäß dem Verfahren der Erfindung die Fluorpolymeren-Dispersionen berührungsfrei von derartigen, Reibung erzeugenden Flächen bzw. Teilen gehalten werden können, sind beispielsweise sogenannte Schlauchpumpen (vgl. Beschreibung in G. Leuschner : « Kleines Pumpen-Handbuch », Verlag Chemie GmbH, Weinheim, Bundesrepublik Deutschland, 1967, Seiten 248 bis 250). Vorzugsweise sind dies aber Kreiselpumpen mit einer sogenannten hydrodynamischen Wellenabdichtung, wie an einem Beispiel in Abbildung 1 (Querschnitt) gezeigt wird. Unter dem Begriff « hydrodynamische Wellenabdichtung » soll hier verstanden werden, daß in einer Kreiselpumpe neben dem üblichen Förderlaufrad (1) ein Entlastungslaufrad (2) angeordnet ist, das während des Betriebs der Pumpe Unterdruck im Bereich der Wellendurchführung bei geöffnetem Ringventil (4) erzeugt, wodurch verhindert wird, daß flüssiges Fördergut in diese Wellendurchführung eindringt oder gar von dort nach außen gelangt, während bei Stillstand der Pumpe die Abdichtung durch das über einen Fliehkraftregler (5) gesteuerte Ringventil erfolgt. Besonders bevorzugt sind solche Kreiselpumpen mit hydrodynamischer Wellenabdichtung, die zusätzlich eine kontinuierlich oder intermittierend arbeitende Wasser-Gegenspülung besitzen, das heißt, es wird zur zusätzlichen Sicherung gegen das Eindringen von flüssigem Fördergut in die Wellendurchführung Wasser über die Bohrung (3) in das Innere der Pumpe gedruckt. Für die Förderung im Kreislauf der Ultrafiltration werden mit Hilfe dieser Pumpen die erforderlichen Fördergeschwindigkeiten von 2 bis 7 m/sec, vorzugsweise 4 bis 6 m/sec erzeugt, durch die die Fluorpolymeren-Dispersionen durch die die Trennung und Aufkonzentrierung bewirkenden semipermeablen Membranen bzw. Membransysteme befördert werden.

Die Auswahl der asymmetrisch aufgebauten Membranen für die Ultrafiltration ist hinsichtlich ihrer stofflichen Zusammensetzung nicht kritisch. Es können sämtliche am Markt verfügbaren Membranen eingesetzt werden, soweit sie eine ausreichende Temperatur- und pH-Stabilität und ein Rückhaltevermögen (Trenngrenze) gegenüber Teilchen mit einem Teilchendurchmesser von $\geqq 0{,}005\ \mu m$, vorzugsweise von $\geqq 0{,}01\ \mu m$, besitzen. In der Praxis werden dazu Membranen ausgewählt, deren mittlerer Porendurchmesser in der trennaktiven Schicht das 0,1 fache, vorzugsweise das 0,5 fache, des kleinsten in der Dispersion vorkommenden Teilchendurchmessers beträgt. Dies sind beispielsweise Membranen aus Celluloseacetat, Polyamid, Polysulfon, Polyacrylnitril sowie aus Fluorpolymeren wie Polytetrafluorethylen, Polyvinylidenfluorid, Polyvinylfluorid, Polytrifluorchlorethylen bzw. fluorhaltige Copolymeren aus Tetrafluorethylen/Hexafluorpropylen/Vinylidenfluorid, Tetrafluorethylen/Ethylen, Tetrafluorethylen/Perfluor (alkylvinyl)-ether/ und gegebenenfalls Hexafluorpropylen, ferner Chlortrifluorethylen/Ethylen, Tetrafluorethylen/Vinylacetat oder Tetrafluorethylen/Perfluorvinylsulfonsäuren bzw. Perfluoracrylsäure.

Solche Membranen werden beim Verfahren der Ultrafiltration in Form von Membranpackungen (Modulen) eingesetzt. Verwendet werden können im erfindungsgemäßen Verfahren Flachmembranen und vorzugsweise Rohrmembranen (bzw. Schlauchmembranen). Diese können zu größeren Einheiten von mehreren oder vielen Einzelmodulen vereinigt werden, die innerhalb des Kreislaufs parallel oder hintereinander geschaltet sind.

Der mit Hilfe der genannten Pumpen am Eingang der Membranen bzw. Membranpackungen erzeugte Druckaufbau liegt je nach Förderleistung und Rohrquerschnitt zwischen etwa 1,0 und 9,0 bar, das Druckgefälle zwischen Membraneingang und Membranaustritt beträgt etwa 0,5 bis 2,5 bar. Die Arbeitstemperatur im Kreislauf der Ultrafiltration nach dem erfindungsgemäßen Verfahren kann in ziemlich

weiten Grenzen, nämlich zwischen 5 und 90 °C, gewählt werden, bevorzugt arbeitet man jedoch bei etwas erhöhten Temperaturen, nämlich zwischen 20 bis 85 °C und insbesondere zwischen 40 und 80 °C, wodurch die Geschwindigkeit des Prozesses heraufgesetzt werden kann.

Zur Stabilisierung der Fluorpolymeren-Dispersionen während des Prozesses selbst und der später austretenden konzentrierten Dispersionen, denen ein Teil oder gegebenenfalls im wesentlichen der gesamte Anteil an fluorhaltigem Emulgator entzogen worden ist, ist die Zugabe eines Stabilisierungsemulgators oder eines Gemisches solcher Substanzen erforderlich. Diese Zugabe erfolgt zweckmäßigerweise vor Einführung der aufzukonzentrierenden Dispersionen in den Kreislauf der Ultrafiltration, und zwar entweder in der Gesamtmenge oder durch Zugabe einer Teilmenge und portionsweises Nachschleusen des verbleibenden Rests.

Die Stabilisierung von Fluorpolymeren-Dispersionen mit Hilfe von Stabilisierungsemulgatoren (Dispersionsstabilisatoren) ist bekannt. Im Rahmen des erfindungsgemäßen Verfahrens können für diesen Zweck sowohl nicht-ionische als auch anionen- oder kationenaktive oberflächenaktive Verbindungen eingesetzt werden, wobei aus Wirtschaftlichkeitsgründen im allgemeinen fluorfreien Verbindungen der Vorzug gegeben wird.

Nicht-ionische Stabilisierungsemulgatoren, die für diesen Zweck in Frage kommen, sind ausführlich beschrieben beispielsweise in der US-A 3 925 292.

Beispielsweise seien hier genannt:

Alkylphenoloxethylate der allgemeinen Formel

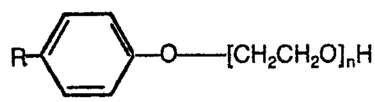

mit n = 4 bis 20, wobei R ein Alkylrest mit 4 bis 20 C-Atomen ist und Ethylenoxideinheiten zum Teil durch Propylenoxideinheiten ersetzt sein können; Fettalkoholoxethylate der allgemeinen Formel

$$R{-}O{-}[CH_2CH_2O]_nH$$

mit n = 4 bis 20, wobei R ein Alkylrest mit 4 bis 20 C-Atomen ist und Ethylenoxideinheiten zum Teil durch Propylenoxideinheiten ersetzt sein können; sowie Ethylenoxid-Propylenoxid-Blockcopolymerisate der allgemeinen Formel

$$H[OCH_2CH_2]_x{-}[O{-}\underset{\displaystyle CH_3}{\underset{|}{C}}H{-}CH_2]_y{-}[OCH_2CH_2]_zOH$$

mit x = 2 bis 20, y = 10 bis 50 und z = 2 bis 20.

Ebenso sind verwendbar die nicht-ionischen Kondensationsprodukte von Aminen, insbesondere Fettaminen, oder von Fettsäureestern mit Ethylenoxid oder Gemischen von Ethylen- und Propylenoxid. Als anionenaktive Tenside, die im Rahmen des erfindungsgemäßen Verfahrens als Stabilisierungsemulgatoren eingesetzt werden können, seien genannt Alkylsulfonate und Alkylsulfate, Alkylarylsulfonate und Alkylarylsulfate, Salze höherer Fettsäuren, Phosphorsäurealkyloder -alkylarylester, oxalkylierte Sulfonsäuren oder deren Salze sowie Sulfobernsteinsäureester oder deren Salze. Als kationenaktive Stabilisierungsemulgatoren geeignete Tenside sind insbesondere die Ammoniumsalze langkettiger sekundärer und tertiärer Fettamine. Bevorzugt sind nichtionische Stabilisierungsemulgatoren. Es können auch Gemische der vorstehend genannten Klassen von Stabilisierungsemulgatoren eingesetzt werden.

Diese Stabilisierungsemulgatoren werden der aufzukonzentrierenden Fluorpolymeren-Dispersion in einer Konzentration von 0,5 bis 12 Gew.-%, vorzugsweise 2 bis 8 Gew.-%, und insbesondere 2 bis 5 Gew.-%, bezogen auf das Feststoffgewicht des Fluorpolymeren in der Dispersion, zugesetzt. Falls, insbesondere bei kontinuierlichem Verfahrensablauf, eine Nachschleusung dieser Stabilisierungsemulgatoren in Betracht kommt, ist darauf zu achten, daß diese Konzentration im Kreislauf im wesentlichen eingehalten wird.

Das erfindungsgemäße Verfahren sei anhand des Fließdiagramms Abb. 2 erläutert. Die wäßrige Ausgangsdispersion des Fluorpolymeren, die einen Polymer-Feststoffgehalt von 5 bis 40 Gew.-%, vorzugsweise 10 bis 30 Gew.-%, aufweist, wird über ein Einlaßventil (6) in ein mittels Tauchkühler (7) temperiertes Vorratsgefäß (8) gefüllt. Über eine Leitung (9) wird der Stabilisierungsemulgator in wäßriger Lösung hinzugegeben. Aus dem Vorratsgefäß wird die so nachstabilisierte Fluorpolymeren-Dispersion über das Ventil (10) und die Leitung (11) mit Hilfe einer mit Wasserspülung aus dem Vorratsgefäß (12) versehenen Kreiselpumpe (13) mit hydrodynamischer Wellanabdichtung (siehe Abb. 1) durch die semipermeable Rohrmembran-Einheit (14) gefördert und im Kreislauf über die Leitung (15) in das Vorratsgefäß (8) zurückgeführt, wobei das wäßrige Permeat, das fluorhaltigen Emulgator und Stabilisierungsemulgator enthält, die Rohrmembran-Einheit und damit den Kreislauf über die Leitung (16) verläßt. Diese Kreislaufförderung der aufzukonzentrierenden Fluorpolymeren-Dispersion wird solange fortgesetzt, bis der gewünschte Gehalt an Polymer-Feststoff von 35 bis 75 Gew.-%, vorzugsweise 40 bis 65 Gew.-%, erreicht ist, wobei je nach Art des Membranmaterials, der Art der Fluorpolymeren-Dispersion und der darin enthaltenen fluorhaltigen Emulgatoren sowie der zugesetzten Stabilisierungsemulgatoren

und je nach Verfahrensbedingungen (Druck, Temperatur, Fördergeschwindigkeit) eine Permeatmenge von 20 bis 600 $l/m^2$ Membranfläche erreicht wird. Sodann wird die aufkonzentrierte Fluorpolymeren-Dispersion über den Ablaßhahn (17) dem Kreislauf entnommen. Das während des gesamten Kreislaufprozesses die Membran-Einheit verlassende Permeat wird außerhalb des Systems gesammelt und kann jeder geeigneten Trennungs- und Wiedergewinnungsoperation zugeführt werden.

In einer bevorzugten Ausführungsform kann dieses Verfahren kontinuierlich gestaltet werden. Dazu wird das Verfahren zunächst wie vorstehend durchgeführt, bis der gewünschte Aufkonzentrierungsgrad erreicht ist. Von diesem Zeitpunkt an ist es erforderlich, die verdünnte Ausgangsdispersion in dem Volumenanteil nachzuführen, der der Summe der Volumenanteile aus abgeführtem Konzentrat und Permeat entspricht.

In einer weiteren, insbesondere bevorzugten Ausführungsform des Verfahrens wird die Aufkonzentrierung durch Ultrafiltration im Kreislauf zunächst bis zum oder bis nahe zu dem gewünschten Aufkonzentrierungsgrad durchgeführt, sodann wird kontinuierlich oder in Portionen in zeitlichen Abständen Wasser nachgeführt, wobei diesem Wasser zweckmäßigerweise weitere Anteile an Stabilisierungsemulgator hinzugefügt werden, und zwar etwa im Ausmaß des über das Permeat abgeführten Anteils. Auf diese Weise ist es möglich, besonders hohe Anteile an fluorhaltigem Emulgator aus den aufzukonzentrierenden Fluorpolymeren-Dispersionen abzutrennen und der Wiedergewinnung zuzuführen.

Je nach Art der Ausgangsdispersion und der darin enthaltenen Ausgangskonzentration an fluorhaltigem Emulgator können nach dem erfindungsgemäßen Verfahren insbesondere auch bei kontinuierlicher Fahrweise etwa 20 bis 75 Gew.-%, bei der beschriebenen Variante der Wassernachführung mehr als 80 Gew.-%, der Ausgangsmenge an fluorhaltigem Emulgator abgetrennt und der Wiedergewinnung zugeführt werden.

Nach dem erfindungsgemäßen Verfahren kann die Auftrennung prinzipiell aller Arten von fluorhaltigen Homo- und Copolymeren-Dispersionen oder auch von Mischdispersionen von Homo- und Copolymeren durchgeführt werden. Besonders erwähnt seien hier kolloidale Dispersionen von aus der Schmelze verarbeitbaren Copolymeren des Tetrafluorethylens, insbesondere solchen aus Tetrafluorethylen/Hexafluorpropylen, Tetrafluorethylen/Perfluor(alkylvinyl)-ethern mit Perfluoralkylresten von 1 bis 5 C-Atomen, insbesondere Perfluor(n-propylvinyl)-ether, Tetrafluorethylen/Ethylen, Tetrafluorethylen/Trifluorchlorethylen, Trifluorchlorethylen/Ethylen, Tetrafluorethylen/Vinylidenfluorid, Hexafluorpropylen/Vinylidenfluorid sowie von Terpolymeren aus Tetrafluorethylen/Perfluor(alkylvinyl)-ether/Hexafluorpropylen, Tetrafluorethylen/Ethylen/Hexafluorpropylen, Tetrafluorethylen/Vinylidenfluorid/Hexafluorpropylen oder aus Quaterpolymeren von Tetrafluorethylen/Vinylidenfluorid/Hexafluorpropylen/Perfluor(alkylvinyl)-ethern. Ebenso können aber auch Dispersionen von Polyvinylfluorid, Polyvinylidenfluorid, Polytrifluorchlorethylen, Poly(fluoracrylaten) oder Poly(fluormethacrylaten) oder von Copolymeren solcher Fluoracrylate und -methacrylate mit anderen Monomeren aufkonzentriert werden. Vorzugsweise wird das erfindungsgemäße Verfahren angewendet für die bekannten Dispersionen des Polytetrafluorethylens, das heißt des aus der Schmelze nicht verarbeitbaren Homopolymerisats, das gegebenenfalls in kleinen Anteilen (0,1 bis 3 Mol-%) modifizierende Comonomere, wie Hexafluorpropylen oder Perfluor(alkylvinyl)-ether oder Chlortrifluorethylen enthalten kann, ferner für die obengenannten Copolymeren-Dispersionen von Tetrafluorethylen/Perfluor(alkylvinyl)-ether, Tetrafluorethylen/Perfluor(alkylvinyl)-ether/Hexafluorpropylen, Tetrafluorethylen/Vinylidenfluorid/Hexafluorpropylen und Tetrafluorethylen/Ethylen/Hexafluorpropylen. Schließlich sind dem erfindungsgemäßen Verfahren auch zugänglich kolloidale Dispersionen von sogenannten Fluortelomer-Wachsen, die durch Telomerisation von Tetrafluorethylen in Gegenwart von Kettenübertragungsmitteln, beispielsweise nach dem Verfahren der DE-C 22 35 885, in wäßriger Emulsion hergestellt werden können.

Diese Fluorpolymeren-Dispersionen besitzen bei der Aufgabe als Ausgangsdispersionen einen Feststoffgehalt von 5 bis 40 Gew.-%, vorzugsweise 10 bis 30 Gew.-%, sowie einen Bereich der Teilchengröße (Teilchendurchmesser) von 0,005 bis 3 $\mu$m, vorzugsweise von 0,01 bis 1 $\mu$m.

Bei den in den Fluorpolymeren-Dispersionen von der Emulsionspolymerisation her vorhandenen fluorhaltigen Emulgatoren, die mit dem erfindungsgemäßen Verfahren teilweise oder nahezu völlig abgetrennt und zurückgewonnen werden können, handelt es sich um Salze von fluorierten oder perfluorierten Carbonsäuren, Sulfonsäuren oder Phosphonsäuren, wie sie beispielsweise in der US-A 2 559 752 beschrieben sind. Dies sind vorzugsweise die Salze fluorierter Alkansäuren der Formel $XCF_2(CF_2)_nCOOM$ (X = H oder Cl, n = 3 bis 10, M = Metall oder $NH_4^+$), fluorierter oder perfluorierter Alkansulfonsäuren der Formel $XCF_2(CF_2)SO_3M$ (X = H oder bevorzugt F, n = 3 bis 10, M = Metall oder $NH_4^+$) sowie auch Salze der Perfluor-[(β)-propoxy)-propionsäure], insbesondere aber Salze von perfluorierten Alkansäuren der Formel $CF_3(CF_2)_nCOOM$ (n = 3 bis 10, M = Metall, $NH_4^+$ oder $NR_4^+$, wobei R ein kurzkettiger Alkylrest ist). Von den Salzen wiederum bevorzugt sind die Alkali-, Erdalkali- und Ammoniumsalze. Besonders bevorzugte fluorhaltige Emulgatoren sind die Alkali- und Ammoniumsalze der Perfluoroctansäure. Es können auch Gemische solcher fluorhaltiger Emulgatoren anwesend sein und der Rückgewinnung zugeführt werden, insbesondere solche mit Perfluoroctansäuresalzen als Hauptbestandteil.

Die aus dem erfindungsgemäßen Verfahren hervorgehenden konzentrierten Fluorpolymeren-Dispersionen, deren Feststoffgehalt gegenüber der Ausgangsdispersion um mindestens 5 Gew.-%,

vorzugsweise von 15 Gew.-% und mehr, erhöht ist, sind unmittelbar gebrauchsfertig. Das aus dem Kreislauf abgenommene Permeat enthält einen Teil, gegebenenfalls einen hohen Anteil des in der Ausgangsdispersion anwesenden fluorhaltigen Emulgators und den Stabilisierungsemulgator in wäßriger Lösung. Dieses Permeat kann einer beliebigen Trennungs- und Rückgewinnungsoperation für diese Substanzen zugeführt werden.

Nach einer bevorzugten Ausführungsform des erfindungsgemäßen Verfahrens wird das aus den Ultrafiltrationsmembranen austretende, fluorhaltigen Emulgator und Stabilisierungsemulgator enthaltende, wäßrige Permeat über basische Anionenaustauscher geleitet, an denen der fluorhaltige Emulgator festgehalten und vom ablaufenden wäßrigen Filtrat getrennt wird, wobei durch anschließende Elution des basischen Anionenaustauschers der fluorhaltige Emulgator zurückgewonnen wird.

Nach einer weiteren bevorzugten Ausführungsform des erfindungsgemäßen Verfahrens wird das aus dem basischen Anionenaustauscher ablaufende, Stabilisierungsemulgator enthaltende wäßrige Filtrat einer Reversosmose-Anlage zugeleitet, in dieser Anlage im Kreislauf über semipermeable Membranen mit einem mit Rückhaltevermögen von Molekulargewicht > 100 geführt und bei einem Druck im Bereich von 10 bis 80 bar aufkonzentriert. Dieses so aus der Reversosmose gewonnene Konzentrat kann gegebenenfalls in den Prozeß der Ultrafiltration zurückgeführt werden.

Dieses spezielle Wiedergewinnungsverfahren für den fluorhaltigen Emulgator und den Stabilisierungsemulgator wird am Fließdiagramm Abb. 3 beispielhaft erläutert, wobei selbstverständlich auch andere Variationen im erfindungsgemäßen Rahmen möglich sind. Das aus dem Ultrafiltrationsprozeß austretende wäßrige Permeat (Abb. 3, Teil A) wird zunächst über die Leitung (16) einem Zwischengefäß (18) (Abb. 3, Teil B) zugeführt und von diesem dann über einen basischen Anionenaustauscher (19) geleitet, an dem der fluorhaltige Emulgator nach bekannten Verfahren adsorbiert und danach durch Elution isoliert und zurückgewonnen werden kann. Vorzugsweise wird für diese Zwecke ein schwach basischer Anionenaustauscher eingesetzt (wie beschrieben in der DE-B 20 44 986), von dem der fluorhaltige Emulgator mittels verdünnter Ammoniaklösung oder mit Hilfe von Gemischen aus konzentrierten Mineralsäuren und organischen Lösungsmitteln (wie beschrieben in der deutschen Offenlegungsschrift 29 03 981) eluiert werden kann.

Das den Anionenaustauscher (19) verlassende wäßrige Filtrat enthält, nachdem der fluorhaltige Emulgator auf die beschriebene Weise abgetrennt worden ist, nunmehr nur noch im wesentlichen diejenigen Anteile an Stabilisierungsemulgator, die die Ultrafiltration über das wäßrige Permeat verlassen hatten. Dieses wäßrige Filtrat wird in einer weiteren bevorzugten Ausführungsform der Erfindung zwecks Aufkonzentrierung und Rückführung in den Prozeß einem Reversosmose-Verfahren zugeleitet. Dazu wird dieses über die Leitung (20) den Anionenaustauscher verlassende wäßrige Filtrat zunächst (vgl. Abb. 3, Teil C), einem Vorratsgefäß (21) zugeführt, das mit einem Tauchkühler (22) ausgestattet ist. Aus dem Vorratsgefäß gelangt das Filtrat, das hier im allgemeinen den Stabilisierungsemulgator in einer Konzentration von 0,5 bis 20 g/l, vorzugsweise von 1 bis 10 g/l, enthält, bei geöffnetem Ventil (23) in den Kreislauf der Reversosmose und wird mittels einer Pumpe (24) über die Rohrmembran-Einheit (25) der Reversosmose-Anlage (oder über mehrere dieser Einheiten) und die Leitung (26) zurück in das Vorratsgefäß (21) gefördert. Diese Reversosmose-Anlage kann in an sich bekannter Weise betrieben werden. Der durch die Pumpe erzeugte Druck vor der Membran liegt im Bereich von 10 bis 80 bar, vorzugsweise von 10 bis 70 bar. Es kann in einem Temperaturbereich von 10 bis 80 °C, vorzugsweise von 20 bis 50 °C und in einem pH-Bereich von 2 bis 8 gearbeitet werden. Geeignet für die Aufkonzentrierung des Stabilisierungsemulgators nach dem Reversosmose-Verfahren sind grundsätzlich alle asymmetrischen Membranen mit einem Rückhaltevermögen gegenüber gelösten Stoffen mit einem Molekulargewicht > 100, das heißt einem Trennschnitt unterhalb des Molekulargewichts des eingesetzten Stabilisierungsemulgators. Geeignet sind hinsichtlich ihrer stofflichen Zusammensetzung diejenigen Membrantypen, die auch bei der Ultrafiltration anwendbar sind, insbesondere Membranen aus Celluloseacetat, Polyamid und Polysulfon. Auch bei der Reversosmose werden die Membranen üblicherweise zu Einheiten (Modulen) zusammengefaßt, wobei Flachmembranen, gegebenenfalls auch Hohlfasermembranen, und vorzugsweise Rohrmembranen (Schlauchmembranen) angewendet werden, die jedoch druckbeständiger ausgeführt und in der Apparatur gelagert sind als beim Ultrafiltrationsprozess erforderlich. Wird die Abtrennung des Stabilisierungsemulgators in einem basischen Anionenaustauscher und dessen anschließende Aufkonzentrierung wie beschrieben durchgeführt, so ist als Stabilisierungszusatz zu der Fluorpolymeren-Dispersion ein kationenaktiver oder vorzugsweise ein nicht-ionischer Stabilisierungsemulgator aus den obengenannten Gruppen einzusetzen.

Das die Reversosmose-Membran verlassende wäßrige Reversosmose-Permeat ist im allgemeinen so weit gereinigt, daß es (Abb. 3, Teil C) über die Leitung (27) gefahrlos in das Abwasser geleitet werden kann. Das im Kreislauf geförderte Stabilisierungsemulgator-Konzentrat wird nach Erreichung einer Konzentration von 50 bis 150 g/l, vorzugsweise von 60 bis 100 g/l an Stabilisierungsemulgator über die Leitung (28) und das Auslaßventil (29) dem Zwischengefäß entnommem und kann dann beliebigen Weiterverwendungen zugeführt werden. Vorzugsweise wird es jedoch mit einer Pumpe (30) in den Prozeß der Aufkonzentrierung durch Ultrafiltration zurückgefördert und kann dort erneut zum Stabilisieren der Ausgangsdispersion dienen.

Die Aufkonzentrierung des wäßrigen, Stabilisierungsemulgator enthaltenden Filtrats kann auch in der Weise kontinuierlich ausgeführt werden, daß die Reversosmose zunächst bis zu einem gewünschten

Aufkonzentrierungsgrad geführt wird. Sodann wird das wäßrige Filtrat in demjenigen Volumenanteil nachgeführt, der der Summe der Volumenanteile aus kontinuierlich abgeführtem Stabilisierungsemulgator-Konzentrat und Reversosmose-Permeat entspricht. Dadurch wird der Stabilisierungsemulgator in gleichmäßigem Aufkonzentrierungsgrad erhalten, was insbesondere bei Rückführung in die Ausgangsdispersion von Vorteil ist.

Nach einer weiteren bevorzugten Ausführungsform des Verfahrens wird das aus dem basischen Anionenaustauscher ablaufende wäßrige Filtrat über die Reversosmose-Anlage und den basischen Anionenaustauscher im Kreis geführt (vgl. Abb 4, Teil B plus C). Durch diese Maßnahme, das heißt die Kombination der Verfahrensteile B und C, ist es möglich, auch sehr geringe Mengen an fluorhaltigem Emulgator, die beim ersten Durchgang durch den basischen Anionenaustauscher noch nicht festgehalten werden, zurückzugewinnen. Zweckmäßigerweise werden hier nach dem Zwischemgefäß (31), versehen mit einem Tauchkühler (32), zwei basische Anionenaustauscher (33) (34) parallel geschaltet, so daß Beschickungsvorgang und Elutionsvorgang und gegebenenfalls Regenerierungsvorgang des Anionenaustauscherszyklisch erfolgen können. Nach beendeter Aufkonzentrierung des Stabilisierungsemulgators in der Reversosmose (24, 25, 26) wird auch hier das gewonnene Konzentrat über das Auslaßventil (29) und die Leitung (28) entnommen und mit der Pumpe (30) vorzugsweise in den Prozeß der Ultrafiltration zurückgefördert, wo es erneut zur Stabilisierung eingesetzt werden kann.

Das in dieser Weise ausführlich beschriebene erfindungsgemäße Verfahren erbringt eine Reihe bemerkenswerter Vorteile, insbesondere auch durch die erfindungsgemäße Kombination der Verfahrensschritte Ultrafiltration — Trennung am basischen Anionenaustauscher — Reversosmose :

1. Es ermöglicht, bei einem vergleichsweise ziemlich ge ringen Platz- und Investitionsbedarf, die Aufkonzentrierung von Fluorpolymeren-Dispersionen in hohen Raum-Zeit-Ausbeuten.

2. Es ist mit erheblicher Engerieersparnis verbunden, da keine Verdampfungsenergie aufgewendet werden muß.

3. Es ermöglicht die Rückgewinnung der wertvollen fluorhaltigen Emulgatoren aus dem polymerisatfreien Permeat des Ultrafiltrationsprozesses, die bisher bei der Weiterverwendung von Fluorpolymeren-Dispersionen verlorengehen. Durch eine Variante des Verfahrens können die aufkonzentrierten Dispersionen sogar bis auf geringe Reste von diesen fluorhaltigen Emulgatoren getrennt werden.

4. Die in der wäßrigen Phase nach der Aufkonzentrierung verbleibenden Anteile des Stabilisierungsemulgators können in sinnvoller Weise in den Prozeß zurückgeführt werden, womit nicht nur ein wertvoller Stoff erhalten, sondern auch eine Belastung des Abwassers vermieden wird.

5. Bei der Auswahl des Stabilisierungsemulgators ergeben sich im Gegensatz zu den bekannten Absetz- und Schichtentrennungsmethoden keine Beschränkungen hinsichtlich des Löslichkeitsverhaltens oder des Trübungspunktes.

6. Das Aufkonzentrierungsverfahren durch Ultrafiltration kann bei Raumtemperaturen ausgeübt werden. Diesem Verfahren sind somit auch kolloidale Dispersionen mit relativ großen Primärteilchen (bis 1 µm und mehr) und damit geringer Stabilität, wie sie zur Erzielung erhöhter Filmdicken benötigt werden, zugänglich. Die bei der Beschichtung mit solchen Dispersionen auftretenden Sinterverluste sind deutlich geringer, als sie bei nach bekannten Verfahren aufkonzentrierten Dispersionen beobachtet werden.

7. Durch das erfindungsgemäße Aufkonzentrierungsverfahren ist eine erhebliche Reduktion des Anteils an notwendigem Stabilisierungsemulgator möglich. Dadurch lassen sich Verfärbungen der daraus hergestellten und gesinterten Produkte vermeiden und beispielsweise Haftverbesserungen bei mit derart aufkonzentrierten Dispersionen hergestellten getränkten Glasfasergeweben und daraus durch anschließende Aufsinterung von Polytetrafluorethylen-Folien hergestellten Laminaten erzielen. Es ist aber selbstverständlich ebenso möglich, aufkonzentrierte Fluorpolymeren-Dispersionen mit einem höheren Anteil an Stabilisierungsemulgator zu erhalten, wenn dies für die in Aussicht genommene Weiterverwendung von Vorteil ist. Derartige Dispersionen besitzen beispielsweise bei Beschichtungen den Vorteil einer verbesserten Filmbildung.

8. Schließlich findet bei dem erfindungemäß durchgeführten Verfahren auch über längere Zeiträume überraschenderweise praktisch keinerlei Koagulatbildung aus der Fluorpolymeren-Dispersion statt. Dadurch werden nicht nur Verluste an teurem und wertvollem Material vermieden, sondern das Verfahren gestaltet sich auch weitgehend störunanfällig.

Nach dem beschriebenen Aufkonzentrierungsverfahren gelangt man zu Fluorpolymeren-Dispersionen, die bei einem hohen Feststoffgehalt gleichzeitig einen außerordentlich niedrigen Gehalt an fluorhaltigen Emulgatoren und einen sehr niedrigen Gehalt an Stabilisierungsemulgatoren aufweisen. Diese wäßrigen, kolloidalen Fluorpolymeren-Dispersionen stellen einen weiteren Gegenstand der Erfindung dar. Sie besitzen einen hohen Polymer-Feststoffgehalt von 35 bis 75 Gew.-%, vorzugsweise von 40 bis 65 Gew.-%, bezogen auf das Gesamtgewicht der wäßrigen Dispersion, und sie sind gekennzeichnet durch einen Gehalt von 0 bis 1 Gew.-% an fluorhaltigem Emulgator und 0,5 bis 4 Gew.-% an Stabilisierungsemulgator, jeweils bezogen auf den Feststoff. Unter einem Gehalt von 0 Gew.-% soll dabei verstanden werden, daß praktisch kein fluorhaltiger Emulgator mehr anwesend ist und dieser nicht analytisch nachgewiesen werden kann. Insbesondere sind dies kolloidale, wäßrige Dispersionen von aus der Schmelze nicht verarbeitbarem Polytetrafluorethylen, das gegebenenfalls bis zu 3 Gew.-% eines modifizierenden Comonomeren enthalten kann, mit dem genannten Feststoffgehalt, die gekennzeichnet

sind durch einen Gehalt an 0 bis 0,19 Gew.-%, vorzugsweise 0 bis 0,01 Gew.-% an fluorhaltigem Emulgator sowie 0,5 bis 3 Gew.-%, vorzugsweise 1 bis 3 Gew.-% an Stabilisierungsemulgator, jeweils bezogen auf den Feststoff. Ferner sind dies insbesondere kolloidale, wäßrige Dispersionen eines aus der Schmelze verarbeitbaren Copolymeren des Tetrafluorethylens mit dem genannten Feststoffgehalt, die dadurch gekennzeichnet sind, daß sie einen Gehalt von 0 bis 0,19 Gew.-%, vorzugsweise 0 bis 0,1 Gew.-%, an fluorhaltigem Emulgator sowie 0,5 bis 5 Gew.-%, vorzugsweise 1 bis 3 Gew.-%, an Stabilisierungsemulgator, jeweils bezogen auf den Feststoffgehalt, aufweisen. Unter den aus der Schmelze verarbeitbaren Copolymeren des Tetrafluorethylens sollen insbesondere die mit den oben genannten Monomeren verstanden werden. Die fluorhaltigen Emulgatoren sind vorzugsweise die Alkali-, Erdalkali- und Ammoniumsalze der Perfluoroctansäure oder solche Salze von Gemischen von perfluorierten Alkansäuren mit 3 bis 10 C-Atomen, in denen die Perfluoroctansäure den Hauptbestandteil (> 50 Gew.-%) ausmacht. Als Stabilisierungsemulgatoren sind diejenigen des nicht-ionischen Typs bevorzugt.

Die erfindungsgemäßen Fluorpolymeren-Dispersionen mit niedrigem Gehalt sowohl an fluorhaltigen Emulgatoren als auch an Stabilisierungsemulgatoren zeichnen sich bei ihrer Anwendung für die Herstellung von Beschichtungen und Tränkungen durch eine verminderte Korrosivität gegenüber Metallteilen, eine verminderte Toxizität und eine erhöhte thermische Stabilität sowie bei der Herstellung von Verbunden durch eine verbesserte Haftung aus.

Die Erfindung wird durch folgende Beispiele erläutert :

## Beispiele

1. Arbeitsvorschrift für die Ultrafiltration

(Vgl. Fließdiagramm Abb. 2)

Soweit in Fußnoten nicht anders vermekt, wurde in den Beispielen 1 bis 18 der Tabelle I nach folgender Arbeitsvorschrift verfahren : Eine Polytetrafluorethylen-Dispersion (bzw. in den Beispielen 12 bis 15 eine Copolymeren-Dispersion der in den entsprechenden Fußnoten vermerkten Zusammensetzung) mit einem Feststoffgehalt von 20 Gew.-% und einem Gehalt von 0,3 Gew.-%, bezogen auf diesen Feststoff, an Ammoniumsalz der Perfluoroctansäure wird über das Einlaßventil (6) und das mittels Tauchkühler (7) temperierte Vorratsgefäß (8) gefüllt. Nach Zugabe des Stabilisierungsemulgators (Menge und Art siehe Tabelle I) über die Leitung (9) wird die Ausgangsdispersion mit Hilfe einer mit Wasserspülung (12) versehenen Kreiselpumpe (13) (Typ RCE, Förderleistung 16 $m^3$/h, Hersteller : Firma Rheinhütte ; abweichend siehe Fußnote zu Beispiel 4) durch zwei parallel angeordnete semipermeable Rohrmembranen (14) (bestehend aus Polyvinylidenfluorid ; Einzellänge 140 cm, Durchmesser 2,5 cm, Fläche 0,2 $m^3$) in Kreisfahrweise zurück in das Vorratsgefäß (8) gefördert. Dabei treten auf der Eingangsseite des Membransystems Drücke bis 4,5 bar sowie an dessen Ausgangsseite bis 2,5 bar auf. Zur völligen Entfernung des fluorhaltigen Emulgators wird in Beispiel 3 eine dreistufige Fahrweise gewählt. Dabei wird die im ersten Durchgang erhaltene aufkonzentrierte Dispersion (enthaltend 56 Gew.-% Feststoff) erneut mit ca. 85 l Wasser versetzt und die über das Permeat verlorengegangene Menge an Stabilisierungsemulgator ergänzt. In der gleichen Weise wird nach dem zweiten Durchgang verfahren.

Das während des Aufkonzentrierungsvorgangs austretende Permeat wird zwecks Rückgewinnung des fluorhaltigen Emulgators sowie des Stabilisierungsemulgators in das Zwischengefäß (18) geleitet. Die aufkonzentrierte Dispersion wird nach Erreichung des gewünschten Feststoffgehalts (Werte siehe Tabelle I) über den Ablaßhahn (17) dem System entnommen.

Für die eingesetzten Stabilisierungsemulgatoren wurden in der Tabelle folgende Kurzbezeichnungen verwendet :

A = p-Isooctylphenol, oxethyliert mit im Mittel 10 Ethylenoxid-Einheiten (Handelsprodukt Triton® X 100 ; Hersteller : Firma Rohm & Haas)

B = p-Isooctylphenol, oxethyliert mit 6 bis 8 Ethylenoxid-Einheiten (Triton® X 114 ; Hersteller : Firma Rohm & Haas)

C = Blockpolymerisat aus Ethylenoxid-Einheiten (80 Gew.-%) und Propylenoxid-Einheiten (20 Gew.-%), Molekulargewicht ca. 6 600 bis 9 300 (Handelsprodukt Genapol® PF 80 ; Hersteller : Hoechst AG)

D = Isotridekanol, oxethyliert mit 8 Ethylenoxid-Einheiten (Handelsprodukt Genapol® X 080 ; Hersteller : Hoechst AG)

E = Blockpolymerisat aus Ethylenoxid-Einheiten (40 Gew.-%) und Propylenoxid-Einheiten (60 Gew.-%, Molekulargewicht ca. 3 100 bis 3 700 (Handelsprodukt Genapol® PF 40 ; Hersteller : Hoechst AG)

F = Cocosfettamin, oxethyliert mit 5 Ethylenoxid-Einheiten (Handelprodukt Genamin® C 050 ; Hersteller : Hoechst AG)

Für die in den letzten drei Spalten der Tabelle I angegebenen Eigenschaften der aufkonzentrierten Fluorpolymeren-Dispersionen wurden folgende Bestimmungsmethoden angewendet :

α) Feststoffgehalt : Dieser wird ermittelt durch Bestimmung des Sinterrückstandes. Die bereits

getrocknete Dispersion wird anschließend bei 380 °C drei Stunden lang gesintert, nach dreiviertel Stunden Abkühlungszeit im Exikator wird der Sinterrückstand gewogen.

β) Viskosität : Die Bestimmung erfolgt in einem Rotations-Viskosimeter, Typ Rotovisko der Firma Gebrüder Haake KG, Berlin, mit einer Meßeinrichtung N V. Der Meßbecher des Rotations-Viskosimeters wird mit 7 $cm^3$ gut durchmischter Dispersion gefüllt, und an den Thermostaten, eingestellt auf 20 °C, angeschlossen. Es wird der Meßkopf 50 benutzt. Die Messung beginnt bei der Schaltstufe mit der niedrigsten Umdrehungszahl (Umdrehungsfaktor 162) und wird bis zur höchsten Umdrehungszahl (Umdrehungsfaktor 1) fortgeführt. Die bei jeder Schaltstufe der Umdrehungszahl abgelesenen Skallenwerte werden mit dem jeweiligen Umdrehungsfaktor und einem weiteren Faktor, der den Einfluß des Meßkopfes und des Meßbechers wiedergibt (für den angewandten Meßkopf 0,063 1) multipliziert. Dies ergibt den Viskositätwert in mPas. Aus den abgelesenen Skalenwerten, multipliziert mit einem vom Gerätehersteller wiedergegebenen Eichfaktor (hier 1,66) ergibt sich die Schubspannung $\tau$. Diese $\tau$-Werte werden gegen die ermittelten Viskositätswerte aufgetragen, und der aus dieser Kurve bei einem Wert $\tau = 50$ abgelesene Punkt ist die Viskosität in mPas, gemessen bei einer Schubspannung von $5 \cdot 10^{-6}$ $N/mm^2$, wie in Tabelle I angegeben.

γ) Filmbildung : Die Dispersion wird auf drei entfettete Aluminiumplatten in verschiedenen Stärken gespritzt, dann zunächst 15 Minuten bei 90 °C und dann 30 Minuten bei 250 °C getrocknet und schließlich 30 Minuten bei 400 °C gesintert. Die verschiedenen Schichtdicken werden gemessen, und es wird festgestellt, bei welcher Schichtdicke die ersten Risse auftreten.

(Siehe die Tabelle I, Seite 10)

Tabelle I

Aufkonzentrierung wäßriger Fluorpolymerdispersionen

| Beispiel Nr. | Temperatur (°C) | Stab. Emulgator-Zusatz (Gew.-%, bez. auf Feststoff) | Zeitdauer (h) | Geschwindigkeit der Permeatabführung l/h [8] Anfang | Mitte | Ende | Mittel | Im Permeat enthalten (Gew.-%, bez. auf Ausgangsmenge): Fluorhaltiger Emulgator | Stab.-Emulgator | Aufkonzentrierte Dispersion: Feststoff (Gew.-%) | Viskosität (mPa · s) | Filmbildung bis μ |
|---|---|---|---|---|---|---|---|---|---|---|---|---|
| 1 | 20 | A (5,7) + C (1,3) | 5,6 | 29 | 10 | 8 | 18 | 45 | nicht best. | 57,8 | 14 | 20 |
| 2 | 40 | A (5,7) + C (1,3) | 4,0 | 43 | 20 | 15 | 28 | 40,5 | 31 | 56,3 | 10 | 12 |
| 3 | 25 | A (5,7) + C (1,3) | 3 · 5,2 | 41 | 13 | 10 | 19 [10] | 81,5 | 3 · 31 | 56,3 | 10 | 12 |
| 4 [1] | 40 | D (4) | 13,8 | 180 | 120 | 60 | 80 | 70 | 27 | 58,6 | 13 | 25 |
| 5 | 80 | A (4,5) + C (1,3) | 3,2 | 40 | 32 | 20 | 31 | 50 | 18 | 57,4 | 10 | 7 |
| 6 | 25 | F (5) | 4,0 | nicht bestimmt | | | | 22 | 12 | 35,0 | nicht bestimmt | |
| 7 | 25 | E (5) | 4,0 | 35 | 29 | 20 | 25 | 70 | 11 | 59,7 | 19 | 10 |
| 8 | 25 | G (5) | 5,0 | 29 | 18 | 13 | 20 | 95 [9] | | 60,5 | 19 | 10 |
| 9 [2] | 25-35 | A (4,5) + C (1,3) | 3,6 | 43 | 31 | 25 | 28 | 20 | 20 | 59,1 | 14 | 7 |
| 10 [3] | 25-32 | A (4,5) + C (1,3) | 2,6 | 50 | 32 | 20 | 39 | 44 | 22 | 60,5 | 16 | 5 |
| 11 [4] | 25-35 | A (4,5) + C (1,3) | 2,5 | 60-70 | 31 | 28 | 40 | 40 | 26 | 59,4 | 14 | 6 |
| 12 [5] | 25 | B (10) | 9,7 | 38 | 25 | 10 | 13 | nicht bestimmt | | 48,5 | 8 | nicht best. |
| 13 [5] | 25 | A (5) | 2,7 | 46 | 30 | 25 | 28 | 43 | 32 | 50,0 | 19 | nicht best. |
| 14 [6] | 25-35 | A (5) | 4,8 | 24 | 17 | 12 | 19 | 41 | 31 | 49,2 | 32 | nicht best. |
| 15 [7] | 25 | A (5) | 5,0 | 24 | 15 | 10 | 18 | 40 | 30 | 50,0 | 30 | nicht best. |
| 16 | 25-30 | A (2,5) + C (1,5) | 4,1 | 31 | 26 | 13 | 23 | 70 | 23 | 60,6 | 16 | 10 |
| 17 | 25 | C (1,5) | 5,0 | 18 | 15 | 8 | 14 | 40 | 30 | 57,0 | 10 | 20 |
| 18 | 25 | C (1,5) | 4,1 | 28 | 20 | 15 | 21 | 42 | 28 | 59,0 | 14 | 19 |
| 19 | 30 | D (1,0) | 3,5 | 35 | 35 | 30 | 29 | 40 | 22 | 58,0 | 14 | 10 |
| 20 [11] | 30 | A (5,0 + Nachführung) | 15 | 35 | 29 | 19 | 25 | 98 | 30 | 59,0 | 18 | 10 |
| 21 | 35-40 | D (3,5) | 12 | 220 | 160 | 60 | 150 | 45 | 30 | 58,5 | 14 | 8 |
| 22 | 35-40 | D (3,5) | 12 | 195 | 140 | 80 | 130 | 55 | 57 | 59,0 | 12 | 8 |

Fußnoten zu Tabelle I siehe folgende Seite

Fußnoten zu Tabelle I

1) Kreiselpumpe RCE, Hersteller : Fa. Rheinhütte Wiesbaden ; Förderleistung : 27 $m^3/h$ ; Membranfläche : 1,2 $m^2$ ; Permeatgeschwindigkeit = Schnitt aller drei Durchgänge ;

2) Membran : Celluloseacetat ;

3) Membran : Polyamid ;

4) Membran : Polysulfon ;

5) Copolymeren-Dispersion Tetrafluorethylen/Perfluor(n-propylvinyl)-ether/Hexafluorpropylen ; 15 Gew.-% Feststoff ; 0,7 Gew.-% $NH_4^+$-Salz der Perfluoroctansäure, bezogen auf Feststoff ;

6) Copolymeren-Dispersion Tetrafluorethylen/Ethylen/Hexafluorpropylen ; 10 Gew.-% Feststoff ; 1,0 Gew.-% $NH_4^+$-Salz der Perfluoroctansäure ;

7) Copolymeren-Dispersion Tetrafluorethylen/Vinylidenfluorid/Hexafluorpropylen ; 10 Gew.-% Feststoff ; 1,1 Gew.-% $NH_4^+$-Salz der Perfluoroctansäure ;

8) Geschwindigkeit am Anfang (0 bis 25 % des abgeführten Permeatvolumens) in der Mitte (50 %) und am Ende 75 bis 100 %) ;

9) Bestimmte Gesamtmenge fluorhaltiger Emulgatoren und Stabilisierungsemulgatoren ;

10) Schnitt aller 3 Durchgänge ;

11) Die Aufkonzentrierung wurde zunächst bis zu einem Feststoffgehalt von etwa 55 Gew.-% geführt. Nach Erreichen wird kontinuierlich Wasser im Ausmaß der Permeatabfuhr nachgeführt, das 0,45 Gew.-% Stabilissierungsemulgator enthält.

2. Arbeitsvorschrift für die Adsorption und Eluierung der Perfluoroctansäure

2.1) Adsorption :

Es wird eine mit Bodenfritte und Hahn versehene Glaskolonne der in Tabelle II angegebenen Abmessungen mit den ebenfalls dort angegebenen Raumteilen (= Füllung) eines schwach basischen Anionenaustauschers (Lewatit® MP 62 ; Hersteller : Bayer AG) gefüllt, mit verdünnter, 4 gew.-%iger Salzsäure in die Chloridform überführt und anschließend mit entsalztem Wasser neutral gewaschen. Das aus der Ultrafiltration kommende Permeat wird mit verdünnter, wäßriger Salzsäure auf einen pH-Wert von 4 bis 5 eingestellt und zur Adsorption der darin enthaltenen Perfluoroctansäure unter den in Tabelle II angegebenen Bedingungen durch die Kolonne bei Normaldruck laufen gelassen.

2.2) Elution der Perfluoroctansäure (Tabelle III) :

Der mit Perfluoroctansäure beladene obengenannte schwach basische Anionenaustauscher wird mit entsalztem Wasser zur Entfernung von verbliebenen Resten an Stabilisierungsemulgator nachgewaschen und anschließend mit der in Tabelle III angegebenen Menge an 1,5 n $NH_4OH$-Lösung eluiert. Die erhaltene ammoniakalische Perfluoroctanoat-Lösung wird unter Rühren mit verdünnter Salzsäure auf einen pH-Wert von 1 eingestellt und die ausgefallenen Kristalle von Perfluoroctansäure durch Filtration abgetrennt. In der letzten Spalte von Tabelle III ist der prozentuale Anteil an rückgewonnener Perfluoroctansäure, bezogen auf die Ausgangsmenge in Permeat der Ultrafiltration, angegeben.

Tabelle II

Adsorption der Perfluoroctansaüre

| Permeat aus Beispiel Nr. | Anionenaustauschersäule Höhe (cm) | Anionenaustauschersäule Querschnitt ($cm^2$) | Anionenaustauschersäule Füllung ($cm^3$) | Eingangskonz. Stab.-emulg. (g/l) | Eingangskonz. Perfluoroctansäure (g/l) | Temperatur (°C) | Durchflußgeschwindigkeit (l/h) | Lösungsmenge (l) | Adsorption Perfluoroctansäure (g) | Adsorption Perfluoroctansäure (%)*) |
|---|---|---|---|---|---|---|---|---|---|---|
| 1 | 60 | 28 | 1 680 | 9 | 1,5 | 25 | 2 | 40 | 60 | 87 |
| 2 | 60 | 28 | 1 680 | 3 | 1,3 | 25 | 2 | 50 | 64 | 90 |
| 4 | 150 | 50 | 7 500 | 3 | 1,0 | 25 | 5 | 210 | 210 | 80 |

(Siehe die Tabelle III, Seite 12)

Tabelle III

Elution der Perfluoroctansäure

| Ionenaustauscher-Filtrat aus Beispiel Nr. | $NH_4OH$-Lösung (l) | Tropfgeschwingdigkeit (l/h) | Rückgewonnene Perfluoroctansäure (g) | (%)*) |
|---|---|---|---|---|
| 1 | 6 | 0,7 | 50 | 83 |
| 2 | 6 | 1 | 56 | 88 |
| 4 | 25 | 4 | 170 | 81 |

*) %, bezogen auf Menge im Eingangs-Permeat

3. Arbeitsvorschrift für die Aufkonzentrierung der wäßrigen Lösung des Stabilisierungsemulgators durch Reversosmose

Das aus dem basischen Anionenaustauscher stammende, wäßrige, von Perfluoroctansäure praktisch freie Filtrat wird zwecks Rückführung des Stabilisierungsemulgators in die Ultrafiltrationsanlage mit Hilfe einer Reversosmose-Anlage aufkonzentriert. Dazu wird das wäßrige Filtrat aus dem basischen Anionenaustauscher, das zunächst in einem Vorratsgefäß (21) gesammelt wurde, über eine Reversosmose-Anlage mit einer Rohrmembran aus Celluloseacetat, Membranfläche 4,5 $m^2$, bei Temperaturen im Bereich 20 bis 25 °C, einem Druck von 40 bar und einem pH-Wert im Bereich 4 bis 5 im Kreis zurück in das Vorratsgefäß (21) geleitet.

Die folgende Tabelle IV gibt die Werte für die erzielte Aufkonzentrierung wieder :

Tabelle IV

| Filtrat aus Beispiel Nr. | Eingangskonzentration Lösung (l) | Menge (g) | Konz. (g/l) | Ausgangskonzentration Lösung (l) | Menge (g) | Konz. (g/l) | Reversosmose-Permeat Lösung (l) | Menge (g) | Konz. (g/l) | Verlust (%) |
|---|---|---|---|---|---|---|---|---|---|---|
| 4 | 1 100 | 3 850 | 3,5 | 80 | 3 340 | 42 | 1 020 | 510 | 0,5 | 13 |

**Ansprüche**

1. Verfahren zur Herstellung konzentrierter, fluorhaltige Emulgatoren enthaltender, kolloidaler Fluorpolymeren-Dispersionen unter Zugabe von Stabilisierungsemulgatoren, dadurch gekennzeichnet, daß die Fluorpolymeren-Dispersion nach Zusatz von 0,5 bis 12 Gew.-% eines Stabilisierungsemulgators, bezogen auf das Polymer-Feststoffgewicht der Dispersion, bei einer Temperatur zwischen 5 und 90 °C im Kreislauf über Einheiten von semipermeablen Ultrafiltrationsmembranen geleitet wird, wobei die Förderung im Kreislauf mit Fördergeschwindikeiten von 2 bis 7 m/sec von Pumpen bewirkt wird, die die Fluorpolymeren-Dispersion berührungsfrei von Reibungskräfte hervorrufenden Teilen halten, und wobei eine Trennung in ein Fluorpolymeren-Dispersionskonzentrat und ein wäßriges Permeat, welches Teile des fluorhaltigen Emulgators und des Stabilisierungsemulgators enthält, erfolgt, und daß das erhaltene fluorpolymeren-Dispersionskonzentrat aus dem Kreislauf abgezogen sowie das wäßrige Permeat getrennt aus dem Kreislauf abgeführt und gegebenenfalls Rückgewinnungsoperationen für die darin enthaltenen Anteile an fluorhaltigem Emulgator und Stabilisierungsemulgator zugeführt wird.

2. Verfahren nach Anspruch 1, dadurch gekennzeichnet, daß das Fluorpolymeren-Dispersionskonzentrat und das wäßrige Permeat kontinuierlich abgezogen und die aufzukonzentrierende Fluorpolymeren-Dispersion im Ausmaß der Summe der Abgezogenen Volumina von Konzentrat und Permeat kontinuierlich nachgeführt wird.

3. Verfahren nach Anspruch 1, dadurch gekennzeichnet, daß die Aufkonzentrierung im Kreislauf zunächst bis zum oder nahe bis zum gewünschten Aufkonzentrierungsgrad geführt wird, sodann kontinuierlich oder portionsweise Wasser hinzugefügt wird, wobei diesem Wasser gegebenenfalls Stabilisierungsemulgator etwa im Ausmaß des über das Permeat abgeführten Anteils hinzugefügt wird, und daß nach Beendigung der Wasserzugabe die Aufkonzentrierung bis zum gewünschten Aufkonzentrierungsgrad fortgesetzt wird.

4. Verfahren nach Anspruch 1 bis 3, dadurch gekennzeichnet, daß das aus den Ultrafiltrationsmembranen austretende, fluorhaltigen Emulgator und Stabilisierungsemulgator enthaltende, wäßrige Permeat über basische Anionenaustauscher geleitet wird, an denen der fluorhaltige Emulgator festgehalten und vom ablaufenden wäßrigen Filtrat getrennt wird, und daß durch anschließende Elution des basischen Anionenaustauschers der Fluorhaltige Emulgator zurückgewonnen wird.

5. Verfahren nach Anspruch 4, dadurch gekennzeichnet, daß das aus dem basischen Anionenaustauscher ablaufende, Stabilisierungsemulgator enthaltende wäßrige Filtrat einer Reversosmose-Anlage zugeleitet, in dieser im Kreislauf über semipermeable Membranen mit einem Rückhaltevermögen von Molekulargewicht > 100 geführt und bei einem Druck im Bereich von 10 bis 80 bar aufkonzentriert wird, und das gewonnene Konzentrat aus der Reversosmose dann gegebenenfalls in den Prozeß der Ultrafiltration zurückgeführt wird.

6. Verfahren nach Anspruch 5, dadurch gekennzeichnet, daß das gewonnene Stabilisierungsemulgator-Konzentrat und das wäßrige Reversosmose-Permeat kontinuierlich abgezogen und das aufzukonzentrierende, aus dem basischen Anionenaustauscher ablaufende Filtrat im Ausmaß der Summe der abgezogenen Volumina dieses Konzentrats und Permeats nachgeführt wird.

7. Verfahren nach Anspruch 4 bis 6, dadurch gekennzeichnet, daß das aus dem basischen Anionenaustauscher ablaufende wäßrige Filtrat zur völligen Abtrennung des fluorhaltigen Emulgators und zur Aufkonzentrierung des Stabilisierungsemulgators über die Reversosmose-Anlage und den basischen Anionenaustauscher im Kreis geführt wird.

8. Verfahren nach Anspruch 4 bis 7, dadurch gekennzeichnet, daß als Stabilisierungsemulgatoren kationenaktive oder nicht-ionische Tenside eingesetzt werden.

9. Verfahren nach Anspruch 1 bis 8, dadurch gekennzeichnet, daß kolloidale Fluorpolymeren-Dispersionen aufkonzentriert werden, die als fluorhaltigen Emulgator Alkali- und/oder Ammoniumsalze der Perfluoroctansäure, gegebenenfalls im Gemisch mit untergeordeten Mengen anderer fluorhaltiger Emulgatoren, enthalten.

10. Kolloidale, wäßrige Dispersion mindestens eines fluorhaltigen Polymeren mit einem Gehalt von 35 bis 75 Gew-% an Polymer-Feststoff, bezogen auf das Gesamtgewicht der Dispersion, dadurch gekennzeichnet, daß sie einen Gehalt von 0 bis 1 Gew.-% an fluorhaltigem Emulgator und von 0,5 bis 4 Gew.-% an Stabilisierungsemulgator, jeweils bezogen auf den Feststoff, aufweist.

11. Kolloidale, wäßrige Dispersion nach Anspruch 10 von aus der Schmelze nicht verarbeitbarem Polytetrafluorethylen, das gegebenenfalls bis zu 3 Gew.-% eines modifizierenden Comonomeren enthalten kann, mit einem Gehalt von 35 bis 75 Gew.-% an Polymer-Feststoff, bezogen auf das Gesamtgewicht der Dispersion, dadurch gekennzeichnet, Daß sie einen Gehalt von 0 bis 0,19 Gew.-% an fluorhaltigem Emulgator und 0,5 bis 3 Gew.-% an Stabilisierungsemulgator, jeweils bezogen auf den Feststoff, aufweist.

12. Kolloidale, wäßrige Dispersion nach Anspruch 10 eines aus der Schmelze verarbeitbaren Copolymeren des Tetrafluorethylens mit einem Gehalt von 35 bis 75 Gew.-% an Polymerfeststoff, bezogen auf das Gesamtgewicht der Dispersion, dadurch gekennzeichnet, daß sie einen Gehalt von 0 bis 0,19 Gew.-% an fluorhaltigem Emulgator und 0,5 bis 4 Gew.-% an Stabilisierungsemulgator, jeweils bezogen auf den Feststoff, aufweist.

## Claims

1. Process for the preparation of concentrated colloidal fluorocarbon polymer dispersions which contain fluorine-containing emulsifiers, whereby stabilizing emulsifiers are added, which is characterised by circulating the fluorocarbon polymer dispersion, after the addition of 0.5 to 12 % by weight of a stabilizing emulsifier, relative to the polymer solids weight of the dispersion, over units of semi-permeable ultrafiltration membranes at a temperature from 5 to 90 °C, conveying of the dispersion in circulation with conveying rates of 2 to 7 m/s being effected by pumps which keep the fluorocarbon polymer dispersion free from contact with components which cause frictional forces whereby separating the dispersion into a fluorocarbon polymer dispersion concentrate and an aqueous permeate which contains parts of the fluorine-containing emulsifier and of the stabilizing emulsifier, removing the resulting fluorocarbon polymer dispersion concentrate from the circulation, and removing the aqueous permeate separately from the circulation and optionally passing said permeate to recovery operations to obtain the portions of fluorine-containing emulsifier and stabilizing emulsifier contained therein.

2. Process as claimed in claim 1, characterised in that the fluorocarbon polymer dispersion concentrate and the aqueous permeate are removed continuously and the fluorocarbon polymer dispersion to be concentrated is subsequently added continously in an amount corresponding to the sum of the volumes of concentrate and permeate removed.

3. Process as claimed in claim 1, characterised in that concentrating in circulation is first carried out up to or almost up to the desired degree of concentration and water is then added continuously or in portions, stabilizing emulsifier optionally being added to this water in an amount about equal to the portion removed via the permeate, and that after terminating the addition of water concentrating is continued to the desired degree of concentration.

4. Process as claimed in any of claims 1 to 3, characterised in that the aqueous permeate leaving the ultrafiltration membranes and containing fluorine-containing emulsifier and stabilizing emulsifier is passed over basic anion exchangers on which the fluorine-containing emulsifier is held and separated from the aqueous filtrate leaving said anion exchanger, and that the fluorine-containing emulsifier is recovered by subsequent elution of the basic anion exchanger.

5. Process as claimed in claim 4, characterised in that aqueous filtrate leaving the basic anion exchanger and containing stabilizing emulsifier is fed to a reverse osmosis unit and in this unit is passed in circulation over semi-permeable membranes with a retention capacity for molecular weights of at least 100 and is concentrated under a pressure in the range from 10 to 80 bars, and the concentrate obtained from the reverse osmosis is then optionally recycled into the ultrafiltration process.

6. Process as claimed in claim 5, characterised in that the stabilizing emulsifier concentrate obtained and the aqueous reverse osmosis permeate are removed continuously, and the filtrate leaving the basic anion exchanger which is to be concentrated is subsequently added in an amount which corresponds to the sum of the volumes of this concentrate and permeate removed.

7. Process as claimed in any claims 4 to 6, characterised in that the aqueous filtrate leaving the basic anion exchanger is passed in circulation over the reverse osmosis unit and the basic anion exchanger whereby completely separating off the fluorine-containing emulsifier and whereby concentrating the stabilizing emulsifier.

8. Process as claimed in any of claims 4 to 7, characterised in tnat cationic or non-ionic surface-active agents are employed as stabilizing emulsifiers.

9. Process as claimed in any of claims 1 to 8, characterised in that colloidal fluorocarbon polymer dispersions which contain alkali metal salts and/or ammonium salts of perfluorooctanoic acid, optionally mixed with minor amounts of other fluorine-containing emulsifiers, as the fluorine-containing emulsifier are concentrated.

10. Colloidal, aqueous dispersion of at least one fluorine-containing polymer having a content of 35 to 75 % by weight of polymer solids, relative to the total weight of the dispersion, which contains from 0 to 1 % by weight of fluorine-containing emulsifier and from 0.5 to 4 % by weight of stabilizing emulsifier, in each case relative to the solids.

11. Colloidal, aqueous dispersion of a non melt-fabricable polytetrafluoroethylene as claimed in claim 10 optionally containing up to 3 % by weight of a modifying comonomer and having a polymer solids content of 35 to 75 % by weight, relative to the total weight of the dispersion, which contains from 0 to 0.19 % by weight of fluorine-containing emulsifier and 0.5 to 3 % by weight of stabilizing emulsifier, in each case relative to the solids.

12. Colloidal, aqueous dispersion of a melt-fabricable copolymer of tetrafluoroethylene as claimed in claim 10 having a polymer solids content of 35 to 75 % by weight, relative to the total weight of the dispersion, which contains from 0 to 0.19 % by weight of fluorine-containing emulsifier and 0.5 to 4 % by weight of stabilizing emulsifier, in each case relative to the solids.

## Revendications

1. Procédé pour préparer des dispersions colloïdales de polymères fluorés, concentrées et contenant des émulsionnants fluorés, avec addition d'émulsionnants stabilisants, procédé caractérisé en ce qu'on fait passer la dispersion de polymères fluorés, à laquelle on a préalablement ajouté de 0,5 à 12 % en poids d'un émulsionnant stabilisant par rapport au poids de la matière solide polymère de la dispersion, en circuit, à une température de 5 à 90 °C, par des unités de membranes semi-perméables d'ultrafiltration, dans lesquelles le transport en circuit est produit à des vitesses de 2 à 7 m/s par des pompes qui maintiennent la dispersion de polymères fluorés sans contact avec des parties provoquant des forces de frottement, et dans lesquelles il se produit une séparation en un concentrat, qui est une dispersion de polymères fluorés, et un perméat aqueux, qui contient des parties de l'émulsionnant fluoré et de l'émulsionnant stabilisant, et en ce que le concentrat, c'est-à-dire la dispersion concentrée de polymères fluorés, est retiré du circuit tandis que le perméat aqueux est éliminé séparément du circuit et éventuellement envoyé à des opérations de récupération pour l'émulsionnant fluoré et l'émulsionnant stabilisant qui s'y trouvent.

2. Procédé selon la revendication 1, caractérisé en ce qu'on soutire en continu la dispersion de polymère fluoré qui a été concentrée et le perméat aqueux et on introduit en complément la dispersion de polymère fluoré à concentrer en une quantité qui correspond à la somme des volumes de concentrat et de perméat qui sont soutirés.

3. Procédé selon la revendication 1, caractérisé en ce que la concentration en circuit est effectuée d'abord jusqu'au taux de concentration voulu ou jusqu'au voisinage de ce taux, puis on ajoute, continuellement ou par portions, de l'eau à laquelle on a éventuellement ajouté de l'émulsionnant stabilisant en une proportion correspondant à peu près à la quantité qui a été entraînée avec le perméat, et en ce qu'on poursuit la concencration, après la fin de l'addition d'eau, jusqu'au degré de concentration voulu.

4. Procédé selon l'une quelconque des revendications 1 à 3, caractérisé en ce qu'on fait passer le

perméat aqueux sortant des membranes d'ultrafiltration, perméat qui contient l'émulsionnant fluoré et l'émulsionnant stabilisant, par des échangeurs d'anions basiques, sur lesquels l'émulsionnant fluoré est retenu et est séparé du filtrat aqueux effluent, et en ce qu'on récupère l'émulsionnant fluoré par élution ultérieure de l'échangeur d'anions basique.

5. Procédé selon la revendication 4, caractérisé en ce qu'on envoie le filtrat aqueux sortant de l'échangeur d'anions basique, filtrat qui contient l'émulsionnant stabilisant, à une installation d'osmose inverse, dans celle-ci on le fait passer en circuit sur des membranes semi-perméables ayant un pouvoir de retenue (seuil de coupure) pour des poids moléculaires supérieurs à 100 et on le concentre sous une pression comprise entre 10 et 80 bar, puis on renvoie éventuellement le concentrat provenant de l'osmose inverse à l'opération d'ultrafiltration.

6. Procédé selon la revendication 5, caractérisé en ce qu'on soutire continuellement le concentrat renfermant l'émulsionnant stabilisant obtenu et le perméat aqueux de l'osmose inverse et on introduit en complément le filtrat sortant de l'échangeur d'anions basique, que l'on doit concentrer, en une quantité correspondant à la somme des volumes de ce concentrat et de ce perméat soutirés.

7. Procédé selon l'une quelconque des revendications 4 à 6, caractérisé en ce qu'on fait parcourir le filtrat aqueux sortant de l'échangeur d'anions basique, pour en séparer totalement l'émulsionnant fluoré et pour concentrer l'émulsionnant stabilisant, un circuit comprenant l'installation d'osmose inverse et l'échangeur d'anions basique.

8. Procédé selon l'une quelconque des revendications 4 à 7, caractérisé en ce qu'on utilise, comme émulsionnants stabilisants, des surfactifs cationiques ou non ioniques.

9. Procédé selon l'une quelconque des revendications 1 à 8, caractérisé en ce qu'on concentre des dispersions colloïdales de polymères fluorés qui contiennent, comme émulsionnants fluorés, des sels de métaux alcalins et/ou d'ammonium de l'acide perfluoro-octanoïque, éventuellement en mélange avec de moindres quantités d'autres émulsionnants fluorés.

10. Dispersion aqueuse colloïdale d'au moins un polymère fluoré, contenant de 35 à 75 % en poids de matière solide polymère par rapport au poids total de la dispersion, dispersion caractérisée en ce qu'elle renferme de 0 à 1 % en poids d'un émulsionnant fluoré et de 0,5 à 4 % en poids d'un émulsionnant stabilisant, à chaque fois par rapport à la matière solide.

11. Dispersion aqueuse colloïdale d'un polytétrafluoréthylène non susceptible d'être mis en œuvre à l'état fondu et contenant éventuellement jusqu'à 3 % en poids d'un comonomère modificateur, cette dispersion contenant de 35 à 75 % en poids de matière solide polymère par rapport au poids total de la dispersion, selon la revendication 10, dispersion caractérisée en ce qu'elle contient de 0 à 0,19 % en poids d'un émulsionnant fluoré et de 0,5 à 3 % en poids d'un émulsionnant stabilisant, à chaque fois par rapport à la matière solide.

12. Dispersion aqueuse colloïdale d'un copolymère du tétrafluoréthylène susceptible d'être mis en œuvre à l'état fondu, contenant de 35 à 75 % en poids de matière solide polymère par rapport au poids total de la dispersion, selon la revendication 10, dispersion caractérisée en ce qu'elle contient de 0 à 0,19 % en poids d'un émulsionnant fluoré et de 0,5 à 4 % en poids d'un émulsionnant stabilisant, à chaque fois par rapport à la matière solide.

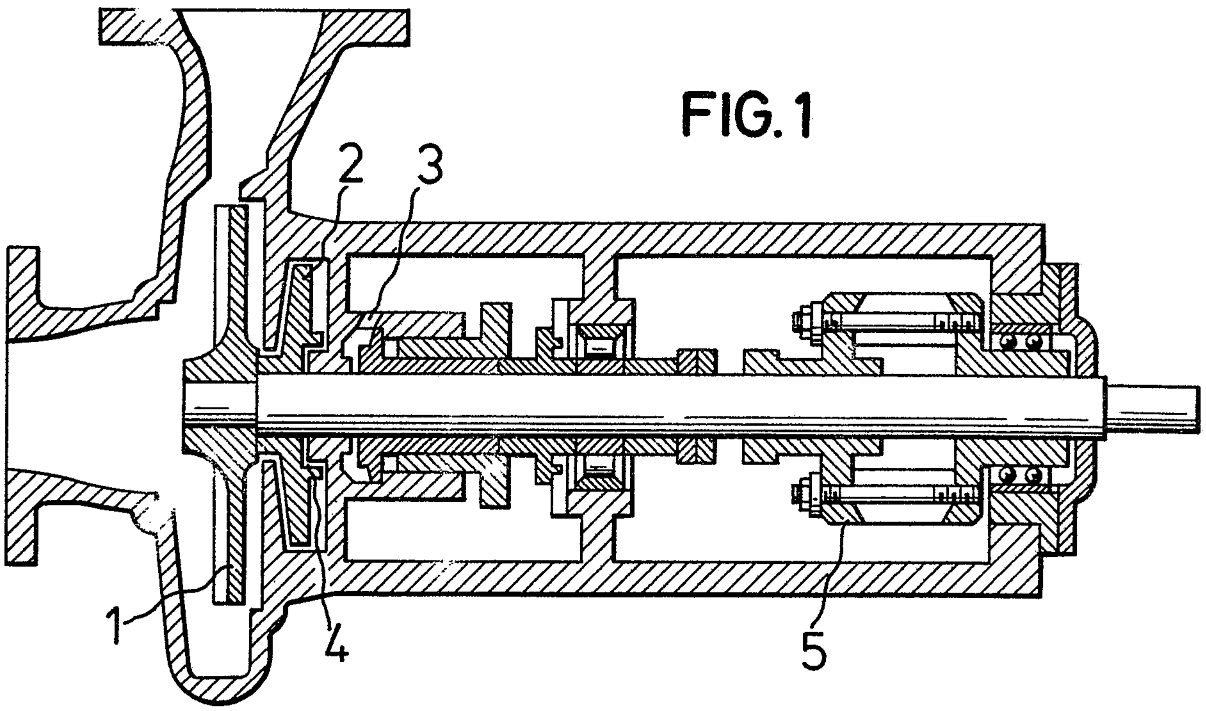


FIG. 1

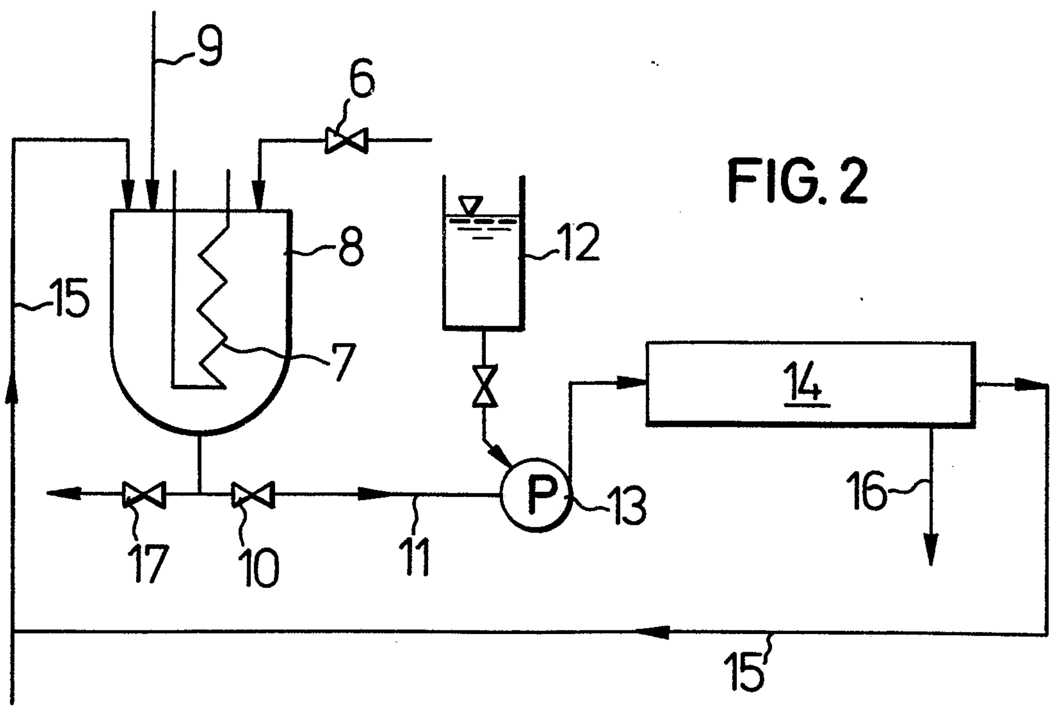


FIG. 2

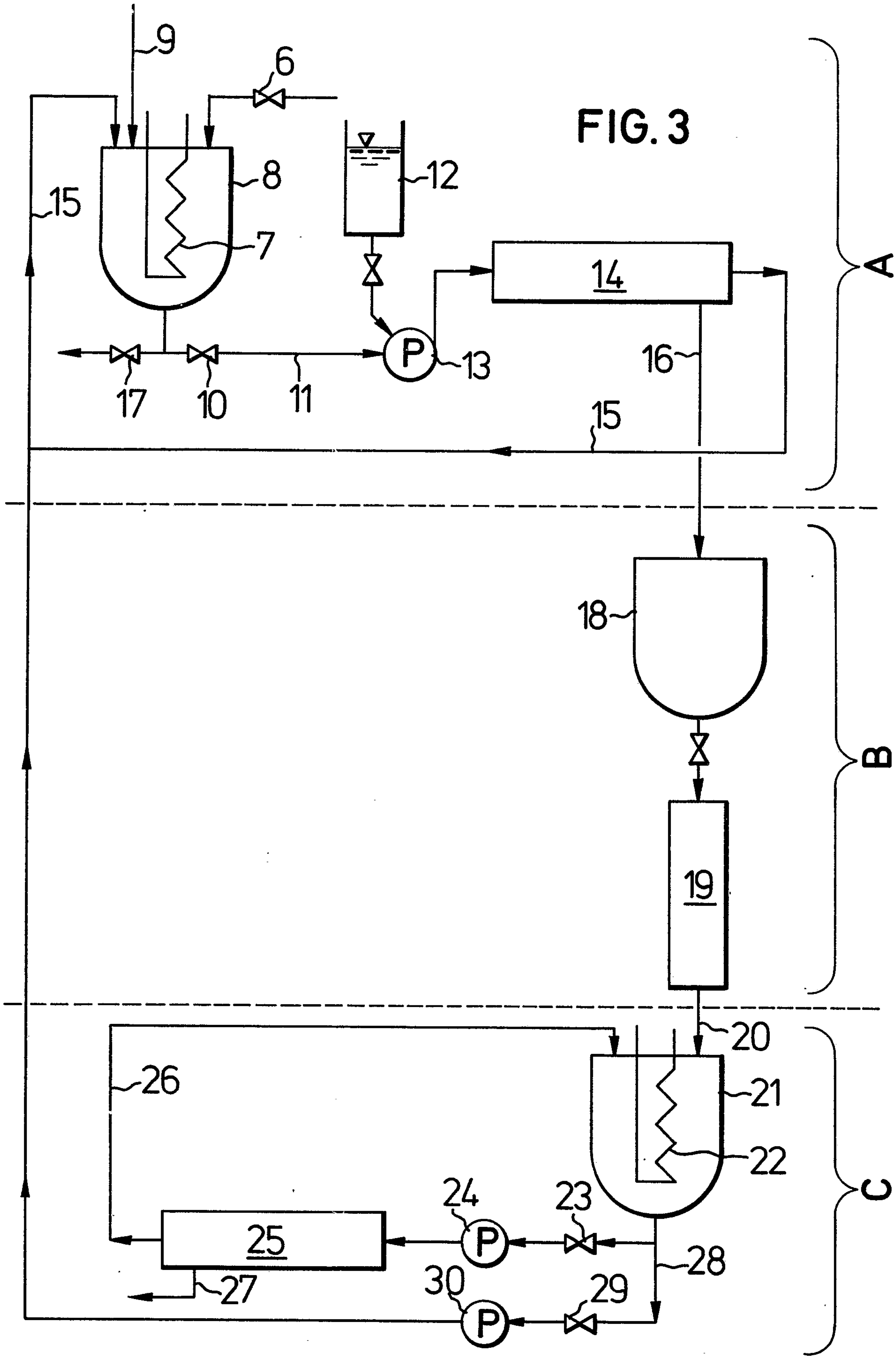
FIG. 3
9
6
8
7
12
14
15
13
16
17
10
11
A
18
B
19
20
26
21
22
24
23
25
28
30
29
27
C

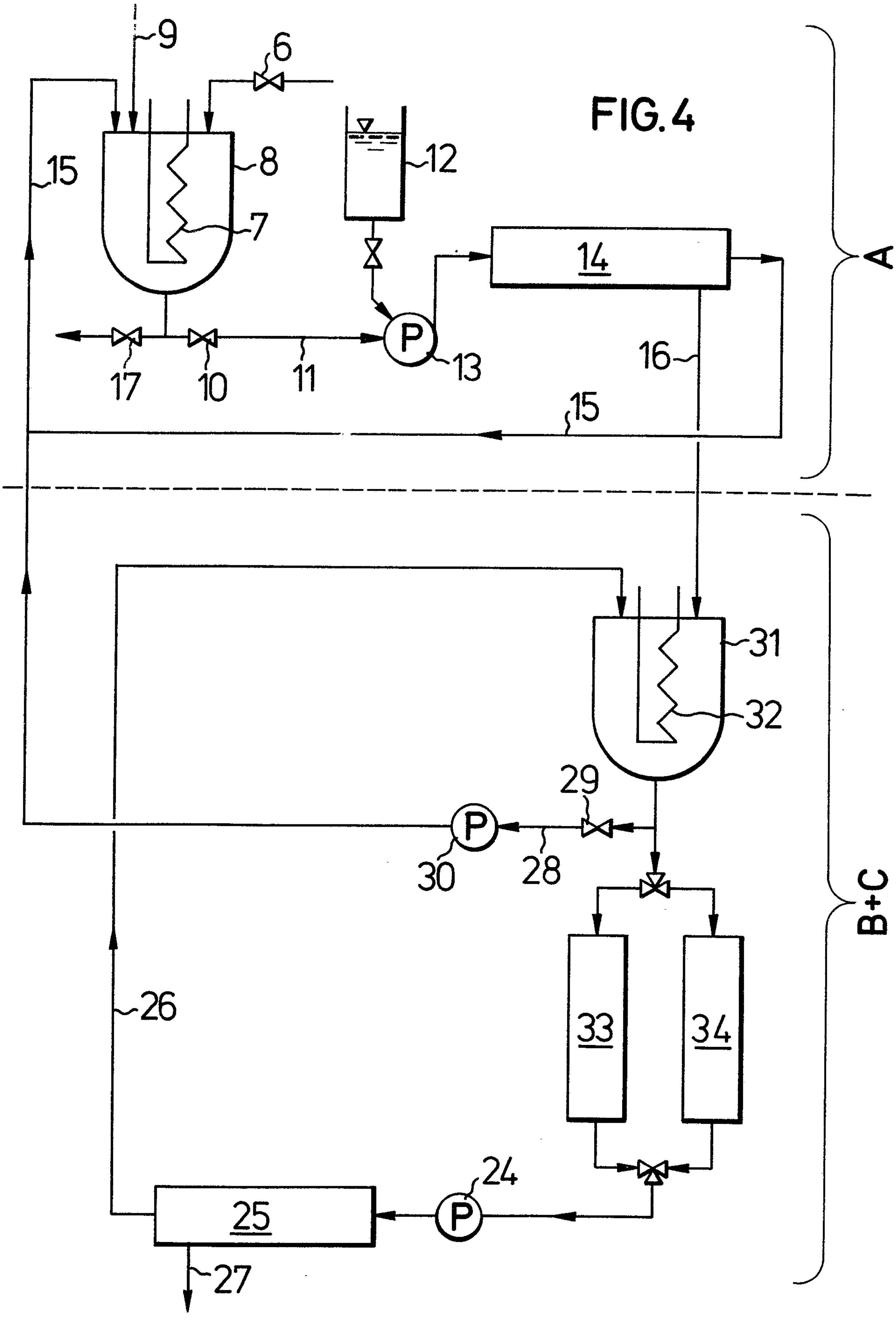


FIG. 4